(19) Europäisches Patentamt / European Patent Office / Office européen des brevets

(11) **EP 4 212 660 B1**

(12) **EUROPEAN PATENT SPECIFICATION**

(45) Date of publication and mention of the grant of the patent:
**07.01.2026 Bulletin 2026/02**

(21) Application number: **20953069.0**

(22) Date of filing: **06.11.2020**

(51) International Patent Classification (IPC):
*D06B 3/02* (2006.01)    *D06M 13/11* (2006.01)
*B29C 53/58* (2006.01)

(52) Cooperative Patent Classification (CPC):
**D06M 15/564; B29B 15/08; B29C 53/582; B29C 53/602; D06M 13/17; D06M 13/224; D06M 15/55;** B29C 70/10; B29C 70/32; D06M 2101/40; D06M 2200/40

(86) International application number:
**PCT/CN2020/126968**

(87) International publication number:
**WO 2022/052284 (17.03.2022 Gazette 2022/11)**

(54) **CARBON FIBER BUNDLE FOR FILAMENT WINDING, PREPARATION METHOD THEREFOR AND USE THEREOF**

KOHLENSTOFFFASERBÜNDEL ZUM WICKELN VON FILAMENTEN, HERSTELLUNGSVERFAHREN DAFÜR UND VERWENDUNG DAVON

FAISCEAU DE FIBRES DE CARBONE POUR ENROULEMENT FILAMENTAIRE, SON PROCÉDÉ DE PRÉPARATION ET D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2020 CN 202010954295**

(43) Date of publication of application:
**19.07.2023 Bulletin 2023/29**

(73) Proprietor: **Jiangsu Hengshen Co., Ltd**
Zhenjiang, Jiangsu 212000 (CN)

(72) Inventors:
• **ZHANG, Shubin**
Zhenjiang, Jiangsu 212000 (CN)
• **HANG, Chuanwei**
Zhenjiang, Jiangsu 212000 (CN)
• **XU, Niuniu**
Zhenjiang, Jiangsu 212000 (CN)
• **PENG, Fei**
Zhenjiang, Jiangsu 212000 (CN)
• **TIAN, Lei**
Zhenjiang, Jiangsu 212000 (CN)
• **CHEN, Mingxin**
Zhenjiang, Jiangsu 212000 (CN)

(74) Representative: **Proi World Intellectual Property GmbH**
**Obermattweg 12**
**6052 Hergiswil, Kanton Nidwalden (CH)**

(56) References cited:
CN-A- 102 713 051    CN-A- 104 195 766
CN-A- 104 812 957    CN-A- 107 109 773
CN-A- 109 648 890    JP-A- 2003 268 674
JP-A- 2016 176 164    JP-A- H01 162 876
US-A1- 2007 026 215

• HANG, CHUANWEI ET AL.: "Effects of the Ingredients in Sizing Agent on the Carbon Fiber Surface Properties", FIBER REINFORCED PLASTICS/COMPOSITES, no. 7, 31 July 2019 (2019-07-31), pages 60 - 64, XP055911294, ISSN: 2096-8000

**Description**

BACKGROUND OF THE INVENTION

1. Technical Field

The invention relates to the technical field of carbon fiber, in particular to a carbon fiber bundle for winding forming, and a preparation method and use thereof.

2. Description of Related Art

Compared with other reinforced fiber, carbon fiber has the characteristics of high strength, high modulus and light weight. With the increase of yield and the decrease of cost of carbon fiber in recent years, its application scope has rapidly expanded from the aerospace field and high-end sports and entertainment field to many industrial fields such as automobile application, wind power sources, pressure vessels and building reinforcement. Especially in recent years, with policy inclination towards new energy vehicles in many countries, in the field of pressure vessels, the demand for carbon fiber is increasing rapidly because of the requirements for high strength and light weight of tanks (usually obtained by winding forming with carbon fiber as reinforcement fiber) for storing gas used as fuel for new energy vehicles such as natural gas and hydrogen.

When pressure vessels such as high-pressure gas cylinders are prepared through winding forming by using carbon fiber bundles as a reinforcing material and epoxy resin as a matrix material, the performance of a final molded product is directly related to the performance and quality of the carbon fiber bundles. The carbon fiber bundles must not only meet the requirements for fiber processing properties, such as fuzzing degree, in the process of rapid winding, but also give full play to their excellent physical properties, especially strength characteristic, in the molded product.

In the design of pressure vessels such as composite gas cylinders, in order to obtain sufficient pressure resistance, there will be clear requirements for the strength of carbon fiber. The higher the pressure resistance of the pressure vessel, the higher the tensile strength of carbon fiber. The ratio of the strength of carbon fiber in composite products to the true strength of carbon fiber bundles is defined as the strength translation rate of carbon fiber bundles. The higher the strength translation rate is, the less carbon fiber is required to achieve the predetermined properties of composite products, which is conducive to reducing the cost of raw materials.

There are many factors that affect the strength translation rate of carbon fiber. Theoretically, the type of matrix resin, molding process parameters, fiber state, interfacial bonding strength, volume fraction of fiber in composite materials, defects and porosity in composite materials may all affect the strength translation rate of carbon fiber. For example, according to Literature 1 (Cheng Yong et al. Influence of spinning process on strength translation rate of carbon fiber wound composites. Solid Rocket Technology. 40,2 (2017): 239-243), the strength translation rate of carbon fiber obtained by dry-jet wet spinning is about 10% higher than that of carbon fiber obtained by wet spinning, mainly because the surface of the former is smoother, so wear resistance is higher, the strength loss during the process is small, and an interface with appropriate strength can be formed. According to Literature 2 (Weiming Chen et al. Effect of new epoxy matrix for T800 carbon fiber/epoxyfilament wound composites. Composites Science and Technology. 67 (2007):2261-2270), the type of resin will obviously affect the strength of an NOL ring of carbon fiber. By improving the formula of resin, the tensile strength of the NOL ring can be increased from about 2200 MPa to about 2500 MPa. In Literature 3 (Li Cuiyun et al. Method for improving fiber strength action rate of carbon fiber composite vessels. Aerospace Materials Technology. 5 (2013): 78-80), it is proposed that fiber dispersion, matrix resin, lining and other factors will affect the fiber strength action rate in carbon fiber composite vessels. US 2007/026215 A1 relates to processing for placing fiber element on a surface. JP 2016176164 A relates to a method for producing a carbon fiber bundle.

However, no literature has clearly pointed out the influence of other states of carbon fiber bundles than strength on the conversion rate thereof.

In view of this, the present invention is proposed.

BRIEF SUMMARY OF THE INVENTION

The invention aims to provide a carbon fiber bundle for winding forming, and a preparation method and use thereof. The carbon fiber bundles for winding forming can be closely arranged on a mandrel during winding without generating gaps, can be quickly impregnated with resin, and have a high strength translation rate.

The invention provides a carbon fiber bundle according to independent claim 1. The invention also provides a preparation method of a carbon fiber bundle according to independent claim 3. Moreover, the invention provides a use of the carbon fiber bundle according to independent claim 10. Further improvements to the above carbon fiber bundle, the preparation method and the use are recited in the dependent claims and the description. The invention is realized as follows.

In a first aspect, an embodiment of the invention provides a carbon fiber bundle for winding forming, and the K value defined according to the following formula is 6.5-8.5;

$$K = L/D;$$

where L is the width of the fiber bundle in mm, and L is 5.5-6 mm; and D is the linear density of the fiber bundle in g/m.

In alternative embodiments, the K value is preferably 7-8;

> preferably, the width volatility of the carbon fiber bundle for winding forming is less than 10%, preferably less than 8%;
> preferably, the drape value of the carbon fiber bundle for winding forming is 40-60 mm;
> preferably, the resin permeation time of the carbon fiber bundle for winding forming is less than 5 s;
> preferably, the number of filaments of the carbon fiber bundle for winding forming is 1,000-100,000;
> preferably, the cross-section shape of the filament of the carbon fiber bundle for winding forming is circular, and surface roughness Ra is below 40; and
> preferably, the strength translation rate of the carbon fiber bundle for winding forming is greater than 60%.

In a second aspect, an embodiment of the invention provides a preparation method of a carbon fiber bundle for winding forming, comprising: dipping pretreated fiber in a sizing agent for sizing, and then drying at 125-145°C for 20-30 s, wherein the tension of the fiber bundle from sizing to drying is controlled to 8-60 mN/tex.

In alternative embodiments, contact drying is conducted by using a hot roller, and the surface temperature of the hot roller is 125-145°C; and
preferably, the tension of the fiber bundle from sizing to drying is controlled to 10-20 mN/tex.

In alternative embodiments, the sizing agent comprises, by mass percentage, 20-25wt% of resin, 5-10wt% of an emulsifier, 2-5wt% of a lubricant and the balance of water;

> preferably, the resin is aromatic epoxy resin; preferably, the aromatic epoxy resin is selected from one or two of bisphenol A epoxy resin and bisphenol F epoxy resin;
> preferably, the emulsifier is selected from one or more of castor oil polyoxyethylene ether, ethylene-propylene copolyether and stilbene phenyl polyoxyethylene ether; and
> preferably, the lubricant is selected from one or two of octyl stearate and octadecyl stearate.

In alternative embodiments, the sizing amount is 1-2.5wt%, preferably 1.2-2%;

> preferably, the viscosity of the sizing agent after drying is 300-600 p; and
> preferably, the viscosity is measured after the sizing agent is dried at 100-110°C for 1-3 h.

In alternative embodiments, the pretreatment of the fiber comprises: conducting oxidation, carbonization and surface treatment on the fiber in sequence;

> preferably, the oxidation is conducted in an air atmosphere of 200-300°C;
> preferably, the carbonization is conducted in a nitrogen atmosphere with the temperature as high as 800-1500°C; and
> preferably, the surface treatment is conducted in an ammonium bicarbonate solution with an electric quantity of 20-100 C/g.

In alternative embodiments, the fiber is polyacrylonitrile-based carbon fiber, pitch-based carbon fiber or viscose-based carbon fiber; and
preferably, the fiber is polyacrylonitrile-based carbon fiber.

In a third aspect, an embodiment of the invention provides a carbon fiber bundle for winding forming, wherein the carbon fiber bundle is prepared by the preparation method of the carbon fiber bundle for winding forming as described in any of the previous embodiments.

In a fourth aspect, an embodiment of the invention provides a use of the carbon fiber bundle for winding forming as described in any of the previous embodiments or the carbon fiber bundle for winding forming according to the previous embodiment as a reinforcement in aerospace, automobile application, wind power sources, pressure vessels and building reinforcement.

The invention has the following beneficial effects.

In this application, by limiting the ratio K of the width to the linear density of the fiber bundle, the relative width of the fiber bundle can be limited, so that the uniformity of cellulose impregnation is high and the thickness uniformity of a molded body is good. In this application, by adjusting the parameters during sizing and drying, the fiber bundle can meet the K value requirement, so that the prepared carbon fiber bundles can be closely arranged on a mandrel without generating gaps, can be quickly impregnated with resin, and have a high strength translation rate.

BRIEF DESCRIPTION OF THE SEVERAL VIEWS OF THE DRAWINGS

The In order to explain the technical solution of the embodiments of the invention more clearly, the drawing which is needed in the embodiments will be briefly introduced below. It should be understood that the following drawing only illustrates some embodiments of the invention, so they should not be regarded as limiting the scope. For those of ordinary skill in the art, other related drawings can be obtained according to the following one without creative labor.

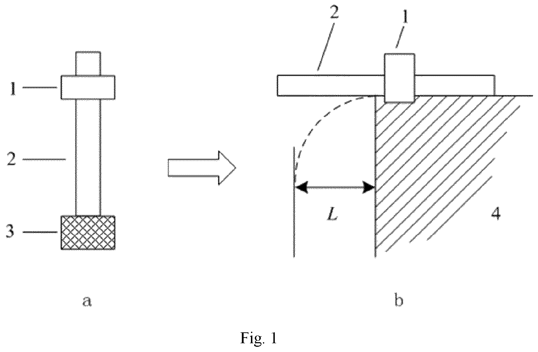

Fig. 1 is a diagram of a method for testing the drape value of carbon fiber provided by an embodiment of the application.

Reference numerals: 1-fixing strap; 2-carbon fiber bundle; 3-weight; 4-horizontal rectangular pedestal; L-horizontal distance of end point of carbon fiber bundle.

DETAILED DESCRIPTION OF THE INVENTION

In order to make the purpose, technical scheme and advantages of the embodiments of the invention clearer, the technical scheme in the embodiments of the invention will be described clearly and completely below. If no specific conditions are indicated in the embodiments, conventional conditions or the conditions suggested by the manufacturer are adopted. Reagents or instruments not marked with manufacturers are conventional products that are available in the market.

Based on the present situation of carbon fiber, the inventors found that the fiber strength loss caused by untwisting, doubling, twisting and spinning during the forming process of carbon fiber can be reduced to a certain extent by adjusting a carbon fiber sizing agent. Through the adjustment of the sizing agent, fuzziness can also be reduced, process passability and production stability can be improved, the affinity between fiber and resin can be improved, and the uniform impregnation of resin to fiber can be promoted. However, adjusting the sizing agent can only improve the strength translation rate of carbon fiber to a certain extent. Adjusting the sizing agent alone cannot lead to a satisfactory result in many cases. It is hoped that the strength translation rate of carbon fiber can be further improved by improving other parameters.

Patent Application No.CN201680005357 provides carbon fiber obtained after sizing. By using a specific sizing agent and controlling the flatness of a fiber bundle to 10-150, a carbon fiber reinforced composite with excellent mechanical properties can be obtained. In this invention, the width of carbon fiber is limited by means of flatness, but the width is limited to a wide range which covers almost all carbon fiber products in the market, so the invention effect cannot be reflected for winding forming.

Patent Application No.CN201880050120 provides carbon fiber subjected to sizing treatment, which has a certain drape value and a certain fuzz amount and can effectively improve manufacturability in processing. However, the strength action rate for a molded product is not mentioned at all.

Patent Application No.CN201410451043 and Patent Application No.CN201410355497 propose a two-stage drying method, that is, contact drying and thermal contact drying are conducted in sequence to keep a fiber bundle flat, reduce the friction coefficient and improve the surface gloss and grade of fiber. However, the properties of subsequent composites are not mentioned.

To improve the strength translation rate of carbon fiber in composite products, the inventors have conducted various researches on carbon fiber bundles used for winding, and found that when carbon fiber is used to prepare composite products through winding forming, if the width of fiber is insufficient or the width uniformity is poor, the thickness of a winding body may be uneven in the process of winding the fiber on a mandrel, and gaps may even be generated, which is very unfavorable to the strength of the products; in addition, if the fiber bundle cannot be well impregnated with resin, it can hardly be completely soaked in the process of roller surface contact impregnation, so there will be dry yarn in the fiber bundle, which is also not conducive to the strength of the products; moreover, if the fiber bundle is too soft, fuzziness may be serious in the winding process, and the performance and quality of the final products will be affected.

To sum up, we found that the ratio of the width to linear density of carbon fiber bundles, the strand integrity and hardness of fiber bundles characterized by the drape value, and the seepage velocity of resin on fiber bundles are decisive factors for improving the strength translation rate of carbon fiber. By controlling the above parameters in a specific range, a carbon fiber bundle with a good strength translation rate can be obtained, thus the invention is proposed.

In order to facilitate the understanding of this application, the detection methods of performance parameters appearing in this application are described as follows.

(1) Width of fiber bundle

Ten carbon fiber bundle samples obtained after sizing with a length of about 40 mm are prepared, the width of each carbon fiber bundle is measured with vernier calipers, and the measured values are averaged.

(2) Width volatility of fiber bundle

The coefficient of variation of width, that is, CV value, is defined as width volatility. The calculation method is as follows:

$$\text{Width volatility} = \sigma/\mu$$

where $\sigma$ is the standard deviation of width and $\mu$ is the average of width.

(3) Linear density of fiber bundle

Ten carbon fiber bundle samples with a length of 1 m are prepared, the weight of each sample is accurately measured with an electronic balance, and the measured values are averaged to obtain the linear density of the fiber bundle.

(4) K value of fiber bundle

Based on the measured values of the width and linear density of carbon fiber, and the formula of the K value mentioned above, the K value is obtained by calculation.

(5) Resin permeation time

A carbon fiber bundle sample is horizontally put on a test bench, both ends are fixed to tighten the sample, resin prepared in advanced is dropped on the fiber bundle, and the time from the resin contacting the fiber bundle to the resin completely infiltrating into the fiber bundle is measured, which is recorded as the resin permeation time.

(6) Drape value

The definition and test method of the drape value of a carbon fiber bundle are as follows.
A cross-section shape of carbon fiber bundle 40 cm long is pulled out from a bobbin and cut off. One end of the carbon fiber bundle 2 is vertically fixed with a fixing strap 1, the other end is hung with a weight 3 with a load of 100 g, and the carbon fiber bundle is allowed to stand for 30 min under temperature and humidity conditions suitable for measurement to correct the bending and twisting of the carbon fiber bundle 2 (a in Fig. 1). Then the weight 3 is removed, the carbon fiber bundle 2 is fixed on a horizontal rectangular pedestal 4 with the fixing strap 1, and a ruler is used to ensure that the horizontal distance between the end of the carbon fiber bundle 2 and the pedestal is 25 cm (b in Fig. 1). The carbon fiber bundle 2 is allowed to droop naturally, a stopwatch is pressed down at the same time, and the horizontal distance L of the end point of the carbon fiber bundle is measured 2 min later, accurate to 0.1 cm. The test is repeated 3 times. The above three values are averaged to obtain the drape value of the carbon fiber sample.
The larger the drape value, the harder the fiber, and the smaller the drape value, the softer the fiber bundle.

(7) Viscosity of main component of sizing agent

A certain amount of sizing agent emulsion is put in a watch glass and dried at 105°C for 2 h to remove water therein, and then the viscosity of the main component obtained is measured with a rotary viscometer.

(8) Strength translation rate of carbon fiber

The tensile strength of carbon fiber bundles is measured according to the national standard GB/T26749-2011 "Carbon Fiber-Determination of Tensile Properties of Resin-Impregnated Yarn", and the value is denoted as $\delta 1$. The tensile test of a Nol ring is conducted according to the national standard GB/T 1458-2008 "Test Method for Mechanical Properties of Ring of Filament-Winding Reinforced Plastics", and the tensile strength of the Nol ring is denoted as $\delta 2$. The strength translation rate of carbon fiber is defined as follows:

$$\text{strength translation rate } r(\%) = \delta 2/(\delta 1 * V_f)$$

where $V_f$ is the volume fraction of carbon fiber in a Nol ring sample.

In a first aspect, an embodiment of the invention provides a carbon fiber bundle for winding forming, and the K value defined according to the following formula is 6.5-8.5;

$$K = L/D;$$

where L is the width of the fiber bundle in mm, and L is 5.5-6 mm; and D is the linear density of the fiber bundle in g/m.

In this application, the definition the ratio K of the width to the linear density of the fiber bundle is essentially an expression of the relative width of the fiber bundle, because there are various specifications of carbon fiber bundles, and the number and diameter of filaments in different specifications vary, so it is impossible to directly compare them based on absolute width. The K value defined by the above formula takes into account the influence of the number and diameter of filaments in the fiber bundle on the width, so it is applicable to any specification of carbon fiber bundle. The larger the K value, the thinner the fiber bundle, the higher the uniformity of resin impregnation, and the higher the thickness uniformity of a molded body, which helps obtain a high strength action rate. The smaller the K value, the thicker the fiber bundle is, so thermosetting resin impregnation is hard during winding forming, the resin content of composite products will be obviously reduced, and the strength characteristic of the obtained molded body is obviously low. The range of the K value should be 6.5-8.5, preferably 7-8, considering the performance of the product and the limit degree that can be achieved in the actual process.

Further, the application also defines the width volatility of carbon fiber bundles for winding forming, which is a representation of the uniformity of the width of carbon fiber bundles. The more uniform the width of carbon fiber bundles, the better the quality and performance of products obtained by winding. If the width volatility is too large, the thickness of the product will be uneven, and there will be gaps or excessive thickness in certain areas, which is very unfavorable to the performance of the final product obtained by winding. The smaller the width volatility, the more stable the width of carbon fiber bundles. In the actual production process, the width value of fiber bundles always fluctuates. From the perspective of improving the quality and performance of products obtained by winding, the volatility should not be greater than 10%, preferably below 8%.

The K value and width volatility of the carbon fiber bundle are mainly adjusted and controlled during sizing, drying and winding. After the fiber bundle is sized, the water content and width of the fiber bundle are controlled with a press roller, and then the fiber bundle is dried with a hot roller immediately, so that the width of the fiber bundle can be fixed. By changing the surface temperature of the hot roller, drying time, and the level of tension applied to the fiber bundle, the K value and width volatility of the fiber bundle can be controlled. Specifically, the width in this application is 5.5-6 mm.

Further, the carbon fiber bundle for winding forming provided by the application also needs to meet the following properties:

the drape value of the carbon fiber bundle for winding forming is 40-60 mm; the resin permeation time is less than 5 s; the number of filaments is 1,000-100,000; and the cross-section shape of the filament is circular and the surface roughness Ra is below 40.

The drape value of the carbon fiber bundle used in the invention for evaluating its strand integrity and hardness should be 40-60 mm. The larger the drape value, the harder the carbon fiber bundle, the better its strand integrity and wear resistance, but it is difficult to achieve uniform resin impregnation. The smaller the drape value, the softer the fiber bundle, the better its yarn spreading performance, which is beneficial to uniform resin impregnation, but the wear resistance will decrease.

In the invention, the resin permeation time of the fiber bundle is used to evaluate how easy it is for the fiber bundle to be impregnated with resin. The shorter the resin permeation time, the better the affinity between the resin and the fiber bundle, and the easier it is for the resin to diffuse into the fiber bundle, so as to prevent difficult resin impregnation and dry yarn. The more uniform resin impregnation is inside and outside the fiber bundle, the more possible it is to obtain high-performance products by winding. The resin permeation time can be controlled by adjusting the sizing agent for the fiber bundle. In the invention, it is required that the resin permeation time must be less than 5 s.

The carbon fiber bundle in the invention should be in a substantially untwisted state. The so-called substantially untwisted state does not mean "completely untwisted", because it is difficult to achieve "completely untwisted" in engineering. Substantially untwisted is defined here as the number of twists per meter of fiber bundle is less than 0.5.

In order to improve the operation manufacturability and engineering passability of carbon fiber and obtain carbon fiber composites with excellent performance during winding forming, the number of filaments of the carbon fiber used is 1,000-100,000, and the cross-section shape of filaments should be approximately circular. It should be understood that in some embodiments, the cross-section shape of filaments can also be elliptical, and the aspect ratio is below 1.08, which is close to circular. The average surface roughness Ra of carbon fiber filaments measured with an atomic force microscope (AFM) should be below 40, and the shallower the grooves on the surface of filaments, the better. When the Ra of the filaments of the carbon fiber is below 40, the carbon fiber shows good strand integrity, and the width volatility of the fiber bundle is small and the fuzziness level is low in winding and unwinding processes.

In order to obtain the carbon fiber with the above specific cross-section shape and surface morphology, it is necessary to control the cross-section shape and surface morphology of the protofilament within a certain range, and then the carbon fiber is prepared through high-temperature heat treatment. The cross-section shape and surface state of the protofilament can be controlled by technical means such as low-speed coagulation after determining the copolymerization components, polymerization degree and solvent, specifically, by adjusting the coagulation conditions such as the concentration and temperature of a coagulating bath during wet spinning, and reducing the drawing ratio during coagulation. If dry-wet spinning is used, the above cross-section shape and surface roughness of the carbon fiber can be easily realized, and no special adjustment or optimization is needed in general.

In this application, due to the above parameter and performance limitations, the carbon fiber bundle for winding forming provided by this application has a good strength translation rate (more than 60%), which can fully spread yarns on the mandrel, be evenly and quickly impregnated with resin, and form a homogeneous molded body, so that the inherent strength of the carbon fiber bundle can be fully exerted, and a high-performance composite product can be obtained by winding forming.

In a second aspect, an embodiment of the invention provides a preparation method of a carbon fiber bundle for winding forming, comprising: dipping pretreated fiber in a sizing agent for sizing, and then drying at 125-145°C for 20-30 s, wherein the tension of the fiber bundle from sizing to drying is controlled to 8-60 mN/tex. The method specifically comprises the following steps.

S1. Fiber pretreatment

The fiber in this application is polyacrylonitrile-based carbon fiber, pitch-based carbon fiber or viscose-based carbon fiber; preferably, polyacrylonitrile-based carbon fiber (PAN-based carbon fiber) is the most suitable in terms of operation manufacturability, manufacturing passability and comprehensive performance. The PAN-based carbon fiber here refers to carbon fiber obtained by preparing PAN protofilaments first from a copolymer obtained by copolymerization of acrylonitrile as the main monomer and ethylene monomers such as itaconic acid, acrylic acid and methyl acrylate with a molar ratio of less than 10%, and then conducting a series of technological processes.

PAN protofilament fiber is sequentially subjected to oxidation in an air atmosphere at 200-300°C, carbonization in a nitrogen atmosphere with the temperature as high as 800-1500°C, and surface treatment in an ammonium bicarbonate solution with an electric quantity of 20-100 C/g.

There are no specific restrictions on the strength and fineness of carbon fiber filaments in the carbon fiber bundle, but if filament fineness exceeds 0.85 dtex, the compactness of fiber is insufficient, and the fuzziness of carbon fiber is serious, which is not conducive to winding forming.

S2. Impregnation, sizing and drying of fiber

The fiber subjected to surface treatment is made to continuously pass through a sizing agent bath (the concentration of the sizing agent is 3%), sizing is conducted by the impregnation method, and then excess sizing agent is removed with a press roller, so as to ensure that the sizing amount is 1-2.5wt%, preferably 1.2-2%. The impregnated fiber is dried at 125-145°C for 20-30 s, and the tension of the fiber bundle during sizing and drying is controlled to 8-60 mN/tex.

It is worth noting that the sizing agent used in this application is a sizing agent with a viscosity of 300-600 P after drying. More specifically, after drying the sizing agent at 100-110°C for 1-3 h, the viscosity is measured, and the sizing agent with a viscosity of 300-600 P is selected as the sizing agent used in this application.

The sizing agent comprises, by mass percentage, 20-25wt% of resin, 5-10wt% of an emulsifier, 2-5wt% of a lubricant and the balance of water;

preferably, the resin is aromatic epoxy resin; preferably, the aromatic epoxy resin is selected from one or two of bisphenol A epoxy resin and bisphenol F epoxy resin;
preferably, the emulsifier is selected from one or more of castor oil polyoxyethylene ether, ethylene-propylene copolyether and stilbene phenyl polyoxyethylene ether; and
preferably, the lubricant is selected from one or two of octyl stearate and octadecyl stearate.

Specifically, in this application, a hot roller with a surface temperature of 125-145°C is use for contact drying. At least a pair of setting guide rollers are arranged on a running channel of the carbon fiber bundle before and after the drying treatment, and the carbon fiber bundle passes through between the pair of guide rollers. Under the squeezing action of the guide rollers, excess sizing agent can be removed so as to adjust the sizing amount, and the width of the fiber bundle can also be adjusted to obtain the fiber bundle with the required K value. In addition, in the drying process, the carbon fiber bundle is dried with a contact hot roller. By adjusting the surface temperature and contact time of the hot roller and the tension of the fiber bundle, the flatness and drape value of the carbon fiber bundle are adjusted.

The lower the surface temperature of the hot roller and the shorter the contact time, the lower the flatness and the larger the drape value of the carbon fiber bundle for winding forming after sizing. However, the drying efficiency decreases with the decrease of the surface temperature. The higher the temperature, the higher the drying efficiency and the better the shaping effect of the fiber bundle. However, if the surface temperature of the hot roller is too high, thermal decomposition or deterioration of the sizing agent tends to occur. Based on comprehensive consideration, the drying temperature of the hot roller in the invention should be 125-145°C, and the contact time should be 20-30 s.

In this application, the tension of the fiber bundle from sizing to drying is controlled to 8-60 mN/tex, preferably 10-20 mN/Tex. The tension mentioned in this application refers to the tension of running fiber, which can be adjusted by adjusting the relative rotation speed between adjacent guide rollers. When the tension is above 8 mN/Tex, the fiber bundle can be expanded uniformly in the sizing process, so that the fiber bundle can be sized uniformly inside and outside, and uniform drying can be realized in the contact drying process, thus avoiding uneven drying which happens in the non-contact drying process and ensuring that the K value and width volatility of the fiber bundle are within the required range. When the tension is below 60 mN/Tex, serious fuzziness caused by friction between the fiber and the guide roller can be avoided, so that the deterioration of fiber grade can be avoided. The tension of the fiber bundle in this application can be measured with an on-line tensiometer.

The carbon fiber bundle for winding forming prepared by the above method has excellent performance and can meet the K value requirement of 6.5-8.5, the width volatility is less than 10%, the drape value is 40-60 mm, the resin permeation time is less than 5 s, the number of filaments is 1,000-100,000, the cross-section shape of the filament is roughly circular, the surface roughness Ra is below 40, and the strength translation rate is greater than 60%. Further, the carbon fiber bundle has good tensile strength, which should be above 4000 MPa, preferably above 4500 MPa. When the fiber strength is too low, it is difficult to obtain composite products with higher mechanical properties. The carbon fiber bundle for winding forming obtained by the application can be widely used as a reinforcement in aerospace, automobile application, wind power sources, pressure vessels and building reinforcement.

The features and performance of the invention will be described in further detail with embodiments.

Embodiments 1-6

Embodiments 1-6 provide a carbon fiber bundle for winding forming, and the preparation method is as follows.

PAN protofilaments produced by Jiangsu Hengshen Co., Ltd were subjected to oxidation in an air atmosphere at 200-300°C, carbonization in a nitrogen atmosphere with the temperature as high as 1350°C, and surface treatment in an ammonium bicarbonate solution with an electric quantity of 40 C/g to obtain unsized HF30s carbon fiber (the number of filaments was 12000, the cross-section shape of filaments was circular, and the surface roughness Ra was 39), the carbon fiber was made to continuously pass through a sizing agent bath (emulsion concentration was 3%), and after impregnation, contact drying was conducted with a hot roller to remove water in the fiber bundle, so that a carbon fiber bundle product was obtained. The surface temperature of the hot roller, the drying time and the tension during sizing and drying are shown in Table 1.

The sizing agent comprised, by mass percentage, 20wt% of resin, 8wt% of an emulsifier, 4wt% of a lubricant and 68wt% of water. The resin was composed of bisphenol A epoxy resin E51, bisphenol A epoxy resin E20 and polyurethane modified epoxy resin with the mass ratio of 60:30:10. The emulsifier was composed of ethylene-propylene copolyether and stilbene phenyl polyoxyethylene ether with the mass ratio of 20:80. The lubricant was octyl stearate. The viscosity of the main components of the sizing agent emulsion after drying was 453P p.

Comparative example 1

The surface temperature and contact time of the hot roller in the drying process were changed, so that the K value and drape value of the fiber bundle were changed, which were not within the range defined by the invention. As shown in Table 1, the strength action rate of the carbon fiber decreased obviously.

Comparative example 2

The ratio of epoxy resin E51 to E20 in the sizing agent was adjusted to 75:15, and the content of polyurethane modified epoxy resin was unchanged, so that the viscosity of the main components of the sizing agent emulsion after drying was 162 P, and all the other technological conditions were the same as those in Embodiment 1. As a result, the drape value of the fiber bundle decreased to 32 mm, the resin permeation time was 3.0 s, the fiber bundle was too soft, and the strength action rate decreased obviously.

Comparative example 3

The content of polymer epoxy resin E51 and polyurethane in the sizing agent was increased, and the ratio of E51, E20 and polyurethane modified epoxy resin was changed to 65:20:15, so that the viscosity value of the main components of the sizing agent emulsion after drying was 825 P, and all the other technological conditions were the same as those in Embodiment 1. As a result, the drape value of the fiber bundle increased to 78 mm, the resin permeation time increased to 8.9 s, the fiber bundle was too hard and too cohesive, the resin could hardly infiltrate into the fiber bundle, and the strength action rate decreased too.

Comparative example 4

The tension of the fiber bundle during sizing and drying was changed to 5 mN/Tex, and all the other technological conditions were the same as those in Embodiment 1. Due to the insufficient tension on the hot roller, the fiber could not be in close contact with the hot roller, resulting in insufficient drying, poor fiber bundle width stability and obvious decline in strength action rate.

The carbon fiber bundles for winding forming obtained in Embodiments 1-6 and Comparative examples 1-4 were subjected to resin permeation time and Nol ring tensile strength testing.

The test methods are as follows.

The resin used for winding forming was epoxy resin E51, the curing agent was anhydride curing agent, and the curing accelerator was imidazoline acetate, which were used after being evenly mixed. The resin permeation time of the fiber bundles obtained in the above embodiments was tested by using this resin.

The Nol ring was prepared and the tensile strength thereof was tested according to the national standard GB/T 1458-2008 "Test Method for Mechanical Properties of Ring of Filament-Winding Reinforced Plastics". The test results are shown in Table 1.

Table 1. Preparation process parameters and test results of Embodiments 1-6 and Comparative examples 1-4.

| | Embodiments | | | | | | Comparative examples | | | |
|---|---|---|---|---|---|---|---|---|---|---|
| | 1 | 2 | 3 | 4 | 5 | 6 | 1 | 2 | 3 | 4 |
| Sizing amount /% | 1.5 | 1.5 | 1.5 | 1.5 | 1 | 2 | 1.5 | 1.5 | 1.5 | 1.5 |
| Linear density (g/m) | 0.80 | 0.80 | 0.80 | 0.80 | 0.80 | 0.80 | 0.80 | 0.80 | 0.80 | 0.80 |
| Surface temperature of hot roller /°C | 130 | 130 | 140 | 140 | 125 | 145 | 155 | 130 | 130 | 130 |
| Contact time of hot roller /s | 20 | 30 | 20 | 30 | 20 | 30 | 15 | 20 | 20 | 20 |
| Tension of fiber bundle (mN/Tex) | 25 | 25 | 25 | 25 | 40 | 10 | 25 | 25 | 25 | 5 |
| Viscosity of sizing agent /P | 453 | 453 | 453 | 453 | 453 | 453 | 453 | 162 | 825 | 453 |
| Width of fiber bundle L (mm) | 5.9 | 6.0 | 5.7 | 5.9 | 5.5 | 5.8 | 4.8 | 6.0 | 4.6 | 5.8 |
| Width volatility /% | 6.8 | 5.4 | 7.3 | 8.0 | 6.8 | 9.8 | 8.6 | 10.2 | 6.9 | 16.5 |
| K value | 7.38 | 7.5 | 7.13 | 7.38 | 6.88 | 7.25 | 6.0 | 7.5 | 5.75 | 7.25 |
| Resin permeation time /s | 3.2 | 3.8 | 4.1 | 3.3 | 4.3 | 3.1 | 3.5 | 3.0 | 8.9 | 2.0 |
| Drape value /mm | 42 | 48 | 48 | 52 | 42 | 53 | 67 | 32 | 78 | 42 |
| Tensile strength of carbon fiber $\delta 1$ (MPa) | 4980 | 4810 | 5020 | 4720 | 4902 | 4865 | 4908 | 4865 | 5064 | 4936 |

(continued)

| | Embodiments | | | | | | Comparative examples | | | |
|---|---|---|---|---|---|---|---|---|---|---|
| | 1 | 2 | 3 | 4 | 5 | 6 | 1 | 2 | 3 | 4 |
| Tensile strength of Nol ring $\delta2$ (MPa) | 2175 | 2023 | 2286 | 2089 | 2096 | 2123 | 1763 | 1649 | 1799 | 1822 |
| Strength action rate /% | 62.4 | 60.1 | 65.1 | 63.2 | 61.1 | 62.3 | 51.3 | 48.4 | 50.8 | 52.7 |

As can be seen from the above table, when the K value, width volatility, drape value and resin permeation time of the fiber bundle are within the range specified by the invention, the average volume content $V_f$ of carbon fiber in the Nol ring sample prepared from the carbon fiber bundle for winding forming provided in Embodiments 1-6 of this application is 70%, and its strength action rate is over 60%, which is obviously higher than that of the comparative examples.

To sum up, when impregnated with thermosetting resin for winding forming, the carbon fiber bundle for winding forming after sizing in the invention can fully spread yarns on the mandrel, be evenly and quickly impregnated with resin, and form a homogeneous molded body, so that the inherent strength of the carbon fiber bundle can be fully exerted, and a high-performance composite product can be obtained by winding forming.

The above embodiments are only preferred ones of the invention, and are not used to limit the invention. For those skilled in the art, the invention may have various modifications and changes.

## Claims

1. A carbon fiber bundle for winding forming, wherein a K value defined according to the following formula is 6.5-8.5;

$$K = L/D;$$

where L is a width of the fiber bundle in mm, and L is 5.5-6 mm; and D is a linear density of the fiber bundle in g/m; wherein a width volatility of the fiber bundle for winding forming is less than 10%;
the width of the fiber bundle being obtainable by: preparing ten carbon fiber bundle samples obtained after sizing having a length of 40 mm, measuring a width of each of the ten samples with vernier calipers, and averaging the measured values;
the width volatility of the fiber bundle being obtainable by: calculating the width volatility = $\sigma/\mu$, where $\sigma$ is a standard deviation of the width and $\mu$ is the average of the width;
the linear density of the fiber bundle being obtainable by: preparing ten carbon fiber bundle samples having a length of 1 m, measuring a weight of each of the ten samples with an electronic balance, and averaging the measured values.

2. The carbon fiber bundle for winding forming according to claim 1, wherein the carbon fiber bundle satisfies one or more of the following (i) to (vii):

(i) the K value is 7-8;
(ii) the width volatility of the carbon fiber bundle for winding forming is less than 8%;
(iii) a drape value of the carbon fiber bundle for winding forming is 40-60 mm;
(iv) a resin permeation time of the carbon fiber bundle for winding forming is less than 5 s;
(v) a number of filaments of the carbon fiber bundle for winding forming is 1,000-100,000;
(vi) a cross-section shape of the filament of the carbon fiber bundle for winding forming is circular, and surface roughness Ra is below 40; and
(vii) a strength translation rate of the carbon fiber bundle for winding forming is greater than 60%.

3. A preparation method of a carbon fiber bundle for winding forming according to claim 1 or 2, comprising: dipping pretreated fiber in a sizing agent for sizing, and then drying at 125-145°C for 20-30 s, wherein a tension of the fiber bundle from sizing to drying is controlled to 8-60 mN/tex.

4. The preparation method of a carbon fiber bundle for winding forming according to claim 3, wherein contact drying is conducted by using a hot roller, and a surface temperature of the hot roller is 125-145°C; and preferably, the tension of the fiber bundle from sizing to drying is controlled to 10-20 mN/tex.

5. The preparation method of a carbon fiber bundle for winding forming according to claim 3, wherein the sizing agent comprises, by mass percentage, 20-25wt% of resin, 5-10wt% of an emulsifier, 2-5wt% of a lubricant and the balance of water;

preferably, the resin is aromatic epoxy resin; preferably, the aromatic epoxy resin is selected from one or two of bisphenol A epoxy resin and bisphenol F epoxy resin;
preferably, the emulsifier is selected from one or more of castor oil polyoxyethylene ether, ethylene-propylene copolyether and stilbene phenyl polyoxyethylene ether; and
preferably, the lubricant is selected from one or two of octyl stearate and octadecyl stearate.

6. The preparation method of a carbon fiber bundle for winding forming according to claim 3, wherein sizing amount is 1-2.5wt%, preferably 1.2-2%;

preferably, a viscosity of the sizing agent after drying is 300-600 p; and
preferably, the viscosity is measured after the sizing agent is dried at 100-110°C for 1-3 h.

7. The preparation method of a carbon fiber bundle for winding forming according to any one of claims 3-6, wherein pretreatment of the fiber comprises: conducting oxidation, carbonization and surface treatment on the fiber in sequence;

preferably, the oxidation is conducted in an air atmosphere of 200-300°C;
preferably, the carbonization is conducted in a nitrogen atmosphere with the temperature as high as 800-1500°C; and
preferably, the surface treatment is conducted in an ammonium bicarbonate solution with an electric quantity of 20-100 C/g.

8. The preparation method of a carbon fiber bundle for winding forming according to any one of claims 3-6, wherein the fiber is polyacrylonitrile-based carbon fiber, pitch-based carbon fiber or viscose-based carbon fiber; and preferably, the fiber is polyacrylonitrile-based carbon fiber.

9. A carbon fiber bundle for winding forming, wherein the carbon fiber bundle is prepared by the preparation method of a carbon fiber bundle for winding forming according to any one of claims 3-8.

10. A use of the carbon fiber bundle for winding forming according to any one of claims 1-2 or the carbon fiber bundle for winding forming according to claim 9 as a reinforcement in aerospace, automobile application, wind power sources, pressure vessels and building reinforcement.

**Patentansprüche**

1. Ein Kohlefaserbündel zum Wickeln, wobei ein gemäß der folgenden Formel definierter K-Wert 6,5-8,5 beträgt;

$$K = L/D;$$

wobei L die Breite des Faserbündels in mm ist und L 5,5 bis 6 mm beträgt; und D die lineare Dichte des Faserbündels in g/m ist;
wobei t eine Breitenvolatilität des Faserbündels für die Wickelformung weniger als 10 % beträgt ;
wobei die e Breite des Faserbündels durch folgende Schritte ermittelt werden kann: Vorbereiten von zehn nach der Dimensionierung erhaltenen Kohlefaserbündelproben mit einer Länge von 40 mm, Messen der Breite jeder der zehn Proben mit einem Messschieber und Mitteln der gemessenen Werte;
die Breitenvolatilität des Faserbündels kann wie folgt ermittelt werden: Berechnung der Breitenvolatilität = $\sigma/\mu$, wobei $\sigma$ die Standardabweichung der Breite und $\mu$ der Durchschnitt der Breite ist;
Die lineare Dichte des Faserbündels kann wie folgt ermittelt werden: Zehn Kohlefaserbündelproben mit einer Länge von 1 m werden vorbereitet, das Gewicht jeder der zehn Proben wird mit einer elektronischen Waage gemessen und der Mittelwert der Messwerte wird berechnet.

2. Kohlenstofffaserbündel zum Wickeln gemäß Anspruch 1, wobei das Kohlenstofffaserbündel eine oder mehrere der folgenden Bedingungen (i) bis (vii) erfüllt:

(i) der K-Wert 7-8 beträgt;
(ii) die Breitenvolatilität des Kohlefaserbündels für die Wickelformung beträgt weniger als 8 %;
(iii) der Drapierwert des Kohlefaserbündels für die Wickelformung beträgt 40 bis 60 mm;
(iv) die Harzpermeationszeit des Kohlenstofffaserbündels für die Wickelformung beträgt weniger als 5 s;
(v) die Anzahl der Filamente des Kohlefaserbündels für die Wickelformung beträgt 1.000 bis 100.000;
(vi) die Querschnittsform des Filaments des Kohlefaserbündels für die Wickelformung ist kreisförmig und die Oberflächenrauheit Ra liegt unter 40; und
(vii) die Festigkeitsübertragungsrate des Kohlenstofffaserbündels für die Wickelformung größer als 60 % ist.

3. Verfahren zur Herstellung eines Kohlenstofffaserbündels für die Wickelformung gemäß Anspruch 1 oder 2, umfassend: Eintauchen der vorbehandelten Faser in ein Schlichtemittel zum Schlichten und anschließendes Trocknen bei 125 bis 145 °C für 20 bis 30 s, wobei die Spannung des Faserbündels vom Schlichten bis zum Trocknen auf 8 bis 60 mN/tex geregelt wird.

4. Verfahren zur Herstellung eines Kohlenstofffaserbündels für die Wickelformung gemäß Anspruch 3, wobei das Kontakttrocknen unter Verwendung einer Heißwalze durchgeführt wird und die Oberflächentemperatur der Heißwalze 125 bis 145 °C beträgt; und
vorzugsweise wird die Spannung des Faserbündels vom Schlichten bis zum Trocknen auf 10 bis 20 mN/tex geregelt.

5. Verfahren zur Herstellung eines Kohlefaserbündels zum Wickeln gemäß Anspruch 3, wobei das Schlichtemittel, bezogen auf Massenprozent, 20 bis 25 Gew.-% Harz, 5 bis 10 Gew.-% Emulgator, 2 bis 5 Gew.-% Schmiermittel und den Rest Wasser umfasst;

vorzugsweise ist das Harz ein aromatisches Epoxidharz; vorzugsweise wird das aromatische Epoxidharz aus einem oder zwei der folgenden ausgewählt: Bisphenol-A-Epoxidharz und Bisphenol-F-Epoxidharz;
vorzugsweise ist der Emulgator ausgewählt aus einem oder mehreren von Rizinusöl-Polyoxyethylenether, Ethylen-Propylen-Copolylether und Stilben-Phenyl-Polyoxyethylenether; und
vorzugsweise wird das Schmiermittel aus einem oder zwei der folgenden ausgewählt: Octylstearat und Octadecylstearat.

6. Verfahren zur Herstellung eines Kohlenstofffaserbündels zum Wickeln gemäß Anspruch 3, wobei die Schlichtemenge 1 bis 2,5 Gew.-%, vorzugsweise 1,2 bis 2 Gew.-%, beträgt;

vorzugsweise beträgt die Viskosität des Schlichtemittels nach dem Trocknen 300 bis 600 p; und
vorzugsweise wird die Viskosität gemessen, nachdem das Schlichtemittel 1 bis 3 Stunden lang bei 100 bis 110 °C getrocknet wurde.

7. Verfahren zur Herstellung eines Kohlenstoffaserbündels für die Wickelformung gemäß einem der Ansprüche 3 bis 6, wobei die Vorbehandlung der Faser umfasst: nacheinander Oxidation, Karbonisierung und Oberflächenbehandlung der Faser;

vorzugsweise wird die Oxidation in einer Luftatmosphäre von 200 bis 300 °C durchgeführt;
vorzugsweise wird die Karbonisierung in einer Stickstoffatmosphäre bei einer Temperatur von 800 bis 1500 °C durchgeführt; und
vorzugsweise wird die Oberflächenbehandlung in einer Ammoniumbicarbonatlösung mit einer elektrischen Menge von 20 bis 100 C/g durchgeführt.

8. Verfahren zur Herstellung eines Kohlenstofffaserbündels zum Wickeln gemäß einem der Ansprüche 3 bis 6, wobei die Faser eine Kohlenstofffaser auf Polyacrylnitrilbasis, eine Kohlenstofffaser auf Pechbasis oder eine Kohlenstofffaser auf Viskosebasis ist; und
vorzugsweise ist die Faser eine Kohlenstofffaser auf Polyacrylnitrilbasis.

9. Kohlenstofffaserbündel für die Wickelformung, wobei das Kohlenstofffaserbündel durch das Herstellungsverfahren eines Kohlenstofffaserbündels für die Wickelformung gemäß einem der Ansprüche 3 bis 8 hergestellt wird.

10. Verwendung des Kohlenstofffaserbündels zur Wickelformung gemäß einem der Ansprüche 1 bis 2 oder des

**EP 4 212 660 B1**

Kohlenstofffaserbündels zur Wickelformung gemäß Anspruch 9 als Verstärkung in der Luft- und Raumfahrt, in Automobilanwendungen, in Windkraftanlagen, in Druckbehältern und zur Verstärkung von Gebäuden.

**Revendications**

1. Faisceau de fibres de carbone pour le formage par enroulement, dans lequel une valeur K définie selon la formule suivante est comprise entre 6,5 et 8,5 ;

$$K = L/D \text{ ;}$$

où L est la largeur du faisceau de fibres en mm, et L est comprise entre 5,5 et 6 mm ; et D est la densité linéaire du faisceau de fibres en g/m ;
dans lequel la volatilité de la largeur du faisceau de fibres pour le formage par enroulement est inférieure à 10 % ;
la largeur e du faisceau de fibres pouvant être obtenue en : préparant dix échantillons de faisceaux de fibres de carbone obtenus après dimensionnement ayant une longueur de 40 mm, mesurant la largeur de chacun des dix échantillons à l'aide d'un pied à coulisse, et calculant la moyenne des valeurs mesurées ;
la volatilité de la largeur du faisceau de fibres pouvant être obtenue en : calculant la volatilité de la largeur = $\sigma/\mu$, où $\sigma$ est l'écart type de la largeur et $\mu$ est la moyenne de la largeur ;
la densité linéaire de l'échantillon de faisceau de fibres pouvant être obtenue en : préparant dix échantillons de faisceaux de fibres de carbone d'une longueur de 1 m, mesurant le poids de chacun des dix échantillons à l'aide d'une balance électronique et calculant la moyenne des valeurs mesurées.

2. Faisceau de fibres de carbone pour le formage par enroulement selon la revendication 1, dans lequel le faisceau de fibres de carbone satisfait à une ou plusieurs des conditions suivantes (i) à (vii) :

   (i) la valeur K est comprise entre 7 et 8 ;
   (ii) la volatilité de la largeur du faisceau de fibres de carbone pour le formage par enroulement est inférieure à 8 % ;
   (iii) la valeur de drapé du faisceau de fibres de carbone pour le formage par enroulement est comprise entre 40 et 60 mm ;
   (iv) le temps de perméation de la résine du faisceau de fibres de carbone pour le formage par enroulement est inférieur à 5 s ;
   (v) le nombre de filaments du faisceau de fibres de carbone pour le formage par enroulement est compris entre 1 000 et 100 000 ;
   (vi) la forme de la section transversale du filament du faisceau de fibres de carbone destiné au formage par enroulement est circulaire, et la rugosité de surface Ra est inférieure à 40 ; et
   (vii) le taux de conversion de résistance du faisceau de fibres de carbone pour le formage par enroulement est supérieur à 60 %.

3. Procédé de préparation d'un faisceau de fibres de carbone pour le formage par enroulement selon la revendication 1 ou 2, comprenant : le trempage de la fibre prétraitée dans un agent d'encollage pour l'encollage, puis le séchage à 125-145 °C pendant 20-30 s, dans lequel la tension du faisceau de fibres entre l'encollage et le séchage est contrôlée à 8-60 mN/tex.

4. Procédé de préparation d'un faisceau de fibres de carbone pour le formage par enroulement selon la revendication 3, dans lequel le séchage par contact est effectué à l'aide d'un rouleau chauffant, et la température de surface du rouleau chauffant est comprise entre 125 et 145 °C ; et
   de préférence, la tension du faisceau de fibres entre l'encollage et le séchage est contrôlée à 10-20 mN/tex.

5. Procédé de préparation d'un faisceau de fibres de carbone pour le formage par enroulement selon la revendication 3, dans lequel l'agent d'encollage comprend, en pourcentage massique, 20 à 25 % en poids de résine, 5 à 10 % en poids d'un émulsifiant, 2 à 5 % en poids d'un lubrifiant et le reste d'eau ;

   de préférence, la résine est une résine époxy aromatique ; de préférence, la résine époxy aromatique est choisie parmi une ou deux résines époxy bisphénol A et résines époxy bisphénol F ;
   de préférence, l'émulsifiant est choisi parmi un ou plusieurs des éthers polyoxyéthyléniques d'huile de ricin, des copolymères éther éthylène-propylène et des éthers polyoxyéthyléniques de stilbène phényle ; et

de préférence, le lubrifiant est choisi parmi un ou deux des stéarates d'octyle et d'octadécyle.

6. Procédé de préparation d'un faisceau de fibres de carbone pour le formage par enroulement selon la revendication 3, dans lequel la quantité d'encollage est de 1 à 2,5 % en poids, de préférence de 1,2 à 2 % ;

de préférence, la viscosité de l'agent d'encollage après séchage est comprise entre 300 et 600 p ; et
de préférence, la viscosité est mesurée après séchage de l'agent d'encollage à 100-110 °C pendant 1 à 3 heures.

7. Procédé de préparation d'un faisceau de fibres de carbone pour le formage par enroulement selon l'une quelconque des revendications 3 à 6, dans lequel le prétraitement de la fibre comprend : la réalisation séquentielle d'une oxydation, d'une carbonisation et d'un traitement de surface sur la fibre ;

de préférence, l'oxydation est effectuée dans une atmosphère d'air à une température comprise entre 200 et 300 °C ;
de préférence, la carbonisation est effectuée dans une atmosphère d'azote à une température pouvant atteindre 800 à 1500 °C ; et
de préférence, le traitement de surface est effectué dans une solution de bicarbonate d'ammonium avec une quantité d'électricité de 20 à 100 C/g.

8. Procédé de préparation d'un faisceau de fibres de carbone pour le formage par enroulement selon l'une quelconque des revendications 3 à 6, dans lequel la fibre est une fibre de carbone à base de polyacrylonitrile, une fibre de carbone à base de brai ou une fibre de carbone à base de viscose ; et
de préférence, la fibre est une fibre de carbone à base de polyacrylonitrile.

9. Faisceau de fibres de carbone pour le formage par enroulement, dans lequel le faisceau de fibres de carbone est préparé par le procédé de préparation d'un faisceau de fibres de carbone pour le formage par enroulement selon l'une quelconque des revendications 3 à 8.

10. Utilisation du faisceau de fibres de carbone pour le formage par enroulement selon l'une quelconque des revendications 1 à 2 ou du faisceau de fibres de carbone pour le formage par enroulement selon la revendication 9 comme renfort dans l'aérospatiale, l'automobile, les sources d'énergie éolienne, les récipients sous pression et le renforcement des bâtiments.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007026215 A1
- JP 2016176164 A
- CN 201680005357
- CN 201880050120
- CN 201410451043
- CN 201410355497

**Non-patent literature cited in the description**

- **CHENG YONG et al.** Influence of spinning process on strength translation rate of carbon fiber wound composites. *Solid Rocket Technology.*, 2017, vol. 40 (2), 239-243
- **WEIMING CHEN et al.** Effect of new epoxy matrix for T800 carbon fiber/epoxyfilament wound composites. *Composites Science and Technology*, 2007, vol. 67, 2261-2270
- **LI CUIYUN et al.** Method for improving fiber strength action rate of carbon fiber composite vessels. *Aerospace Materials Technology.*, 2013, vol. 5, 78-80